# EUROPÄISCHE PATENTSCHRIFT

(11) **EP 2 220 426 B1**
(45) Veröffentlichungstag und Bekanntmachung des Hinweises auf die Patenterteilung: **26.02.2014**
(21) Anmeldenummer: 08848315.1
(22) Anmeldetag: 31.10.2008
(51) Int. Cl.: F21S 9/04, F03D 1/04, F03G 7/04, H02J 7/35, F24J 2/54, F03D 9/00, F21S 8/08

(54) **LEUCHTE MIT AUSNUTZUNG VON AUFWIND ZUR ENERGIEVERSORGUNG**
LAMP USING UPDRAFT FOR ENERGY SUPPLY
LAMPE UTILISANT UN COURANT D'AIR ASCENDANT POUR ASSURER UNE ALIMENTATION EN ÉNERGIE

(30) Priorität: 05.11.2007 DE 102007052670; 24.04.2008 DE 102008020587
(43) Veröffentlichungstag der Anmeldung: 25.08.2010
(73) Patentinhaber: Zumtobel Lighting GmbH, 32657 Lemgo (DE)
(72) Erfinder: LEIBIG, Joachim, 83374 Oderberg (DE)
(74) Vertreter: Thun, Clemens
(86) Internationale Anmeldenummer: PCT/EP2008/009209
(87) Internationale Veröffentlichungsnummer: WO 2009/059726

(56) Entgegenhaltungen:
- WO-A-2006/022590
- DE-A1- 3 017 224
- DE-A1- 3 523 028
- DE-A1- 19 503 512
- DE-A1- 19 518 838
- FR-A- 2 473 641
- GB-A- 2 302 139

## Beschreibung

Die Erfindung betrifft eine Leuchte mit einer Lichtquelle, einem Leuchtengehäuse und Energieumwandlungsmitteln zur Umwandlung von Energie einer Luftströmung in elektrische Energie.

Eine derartige Leuchte ist in der internationalen Patentanmeldung WO 2007/113498 A2 beschrieben. Diese Leuchte weist einen Generator auf, mit dem Windenergie in elektrische Energie umgewandelt werden kann, die dann zum Betrieb der Leuchte zur Verfügung steht. Ein grundsätzliches Problem bei einer derartigen Leuchte kann darin gesehen werden, dass die Rahmenbedingungen für den Antrieb des Generators üblicherweise zeitlich sehr stark schwanken, so dass sich in der Regel nicht oder doch nur mit sehr großer Unsicherheit angeben lässt, wieviel elektrische Energie in einem in der Zukunft liegenden Zeitintervall mit dem Generator erzeugt werden kann. Daher muss bei einer derartigen Leuchte das Risiko in Kauf genommen werden, dass zu bestimmten Zeiten zu wenig Energie zum Betrieb der Leuchte zur Verfügung steht oder aber es müssen zusätzliche, andersartige elektrische Energiequellen zum Betrieb der Lichtquelle der Leuchte vorgesehen werden.

Aus der WO/022590 A1 ist eine Straßenleuchte mit einem hohlen Mast bekannt, in dem durch eine aufwärts gerichtete Luftströmung ein Generator angetrieben wird.

Aus der DE 195 03 512 A1 ist eine Windenergie-Mastleuchte mit einem hohlen Leuchtenmast bekannt, in dem eine aufwärts gerichtete Luftströmung eine Innenturbine antreibt.

Aus der DE 195 18 838 A1 ist eine Windenergie-Mastturbine mit Leuchte bekannt, bei der in einem Mastsegment ein Turbinenrad angeordnet ist, das durch aufsteigende Luft angetrieben wird.

Aus der FR 2 473 641 ist eine Leuchte bekannt, die einen Dynamo aufweist, mit dessen Hilfe ein Akku aufgeladen werden kann, der zur Stromversorgung einer Lichtquelle der Leuchte dient.

Der Erfindung liegt die Aufgabe zu Grunde, eine gattungsgemäße Leuchte mit verbesserter Energieversorgungssituation anzugeben. Insbesondere soll eine solche Leuchte angegeben werden, die erweiterte Möglichkeiten zur Gewinnung elektrischer Energie bietet.

Diese Aufgabe wird gemäß der Erfindung mit dem in dem unabhängigen Anspruch genannten Gegenstand gelöst. Besondere Ausführungsarten der Erfindung sind in den abhängigen Ansprüchen angegeben.

Gemäß der Erfindung ist eine Leuchte vorgesehen, die eine Lichtquelle, ein Leuchtengehäuse und Energieumwandlungsmittel zur Umwandlung von Energie einer Luftströmung in elektrische Energie aufweist. Dabei sind die Energieumwandlungsmittel dazu ausgelegt, Energie einer Luftströmung umzuwandeln, die innerhalb des Leuchtengehäuses aufwärts gerichtet ist.

Dadurch, dass mit den Energieumwandlungsmitteln eine aufwärts gerichtete Luftströmung in elektrische Energie umgewandelt werden kann, ist eine zusätzliche Möglichkeit zur Gewinnung elektrischer Energie gegeben. Auf diese Weise lässt sich prinzipiell zuverlässiger elektrische Energie für den Betrieb der Leuchte zur Verfügung stellen. Mit anderen Worten kann die Wahrscheinlichkeit dafür, dass ausreichend Energie für den Betrieb der Leuchte zu einem bestimmten Zeitpunkt zur Verfügung steht, erhöht werden.

Vorteilhaft kann die Lichtquelle mit elektrischer Energie betrieben werden und die Leuchte weist weiterhin Mittel zum Betrieb der Lichtquelle mit aus den Energieumwandlungsmitteln gewonnener elektrischer Energie auf.

Vorteilhaft weist die Leuchte weiterhin einen aufladbaren Energiespeicher, vorzugsweise in Form einer Batterie auf, der dazu ausgelegt ist, die Lichtquelle mit elektrischer Energie zu versorgen, und der so mit den Energieumwandlungsmitteln verbunden ist, dass er mit elektrischer Energie, die mit den Energieumwandlungsmitteln gewonnen ist, aufgeladen werden kann.

Damit für die Leuchte in der Startphase ein uneingeschränkter zuverlässiger Betrieb möglich ist, ist die Leuchte vorzugsweise dazu ausgelegt, die gesamte elektrische Energie in einer Startphase der Lichtquelle ausschließlich dem aufladbaren Energiespeicher bzw. der Batterie zu entziehen.

Die Leuchte weist weiterhin einen Kamin mit einer Kaminwand zur Führung der innerhalb des Leuchtengehäuses aufwärts gerichteten Luftströmung auf, wobei der Kamin in dem Leuchtengehäuse angeordnet ist. Dabei können vorteilhaft die Energieumwandlungsmittel eine Turbine umfassen, die oberhalb des Kamins oder in einem oberen oder in einem unteren Bereich des Kamins angeordnet ist, und die dazu ausgelegt ist, durch die oben aus dem Kamin austretende Luftströmung angetrieben zu werden. Beispielsweise kann das Leuchtengehäuse in Form eines Mastes vorgesehen sein. Dies ermöglicht auf vergleichsweise raumsparende Weise eine besonders gute Kaminwirkung. Dabei kann weiterhin vorgesehen sein, dass das Leuchtengehäuse bzw. der Mast zumindest teilweise die Kaminwand bildet.

Vorteilhaft weist dabei die Leuchte weiterhin wenigstens ein Solarpaneel auf, das thermisch mit der Kaminwand verbunden ist. Das Solarpaneel kann dabei dafür vorgesehen sein, elektrische Energie zur Aufladung des aufladbaren Energiespeichers zur Verfügung zu stellen.

Wenn vorgesehen ist, dass sowohl Sonnenenergie, als auch Energie einer Luftströmung zur Gewinnung elektrischer Energie für die Leuchte ausgenutzt werden soll, trägt die erfindungsgemäße Ausnutzung der aufwärts gerichteten Luftströmung insbesondere auch dazu bei, dass die Zuverlässigkeit der Energieversorgung auch in dem Fall verbessert wird, in dem die Leuchte so aufgestellt ist, dass das Solarpaneel nicht optimal hinsichtlich der Ausnutzung der Sonnenstrahlung ausgerichtet ist. Beispielsweise kann aus ästhetischen Erwägungen eine entsprechende, in solartechnischer Hinsicht nicht optimale Aufstellung der Leuchte erwünscht sein.

Vorteilhaft ist die Lichtquelle thermisch mit der Kaminwand verbunden, weil hierdurch zum einen die Kühlung der Lichtquelle und zum anderen der Auftrieb einer im Kamin befindlichen Luft gefördert werden.

Vorzugsweise wird über eine so genannte Heatpipe die Wärme an den gewünschten Ort der Kaminwand bzw. des Mastes abgefühlt. Durch diese abgeführte Wärme wird die Temperaturdifferenz innerhalb des Kamins erhöht und dadurch der gewünschte Strömungseffekt innerhalb des Kamins begünstigt. Es kann also vorgesehen sein, dass die Leuchte weiterhin wenigstens eine Heatpipe aufweist, die thermisch mit der Kaminwand bzw. dem Mast verbunden ist.

Vorteilhaft sind die Energieumwandlungsmittel weiterhin dazu ausgelegt, außerdem Energie einer gegebenenfalls im Umfeld des Leuchtengehäuses vorhandenen, im Wesentlichen horizontalen Luftströmung bzw. einer Luftströmung mit einer horizontalen Komponente in elektrische Energie umzuwandeln. Vorteilhaft umfassen dabei die Energieumwandlungsmittel Luftleitmittel, die dazu ausgelegt sind, die im Wesentlichen horizontale Luftströmung bzw. die horizontale Komponente in das Innere der Leuchte zu leiten.

Das Leuchtengehäuse weist einen lichtdurchlässigen Bereich auf; hierdurch wird ermöglicht, dass Sonnenstrahlung in das Innere der Leuchte gelangt und auf diese Weise zur weitergehenden Erwärmung und Unterstützung der aufwärts gerichteten Luftströmung beiträgt. Dieser Effekt wird nochmals unterstützt, indem die Innenwand des Kamins in einem Bereich, der - mit Bezug auf die vertikale Hauptachse des Leuchtengehäuses - dem lichtdurchlässigen Bereich gegenüberliegt, schwarz ist, denn hierdurch wird die Absorption der einfallenden Strahlung an der inneren Kaminwand verstärkt. Dabei erstreckt sich der lichtdurchlässige Bereich - im Horizontalschnitt betrachtet - lediglich auf einer Hälfte des Leuchtengehäuses.

Die Erfindung wird im Folgenden anhand eines Ausführungsbeispiels und mit Bezug auf die Zeichnungen näher erläutert. Es zeigen:
- Fig. 1: eine perspektivische skizzenhafte Ansicht eines ersten Ausführungsbeispiels einer erfindungsgemäßen Leuchte,
- Fig. 2: eine Skizze eines Querschnitts der in Fig. 1 skizzierten Leuchte entlang des Schnitts A-A',
- Fig. 3: eine Skizze zu einem zweiten Ausführungsbeispiel einer erfindungsgemäßen Leuchte, und
- Fig. 4: eine Skizze zu einer weiteren erfindungsgemäßen Variante.

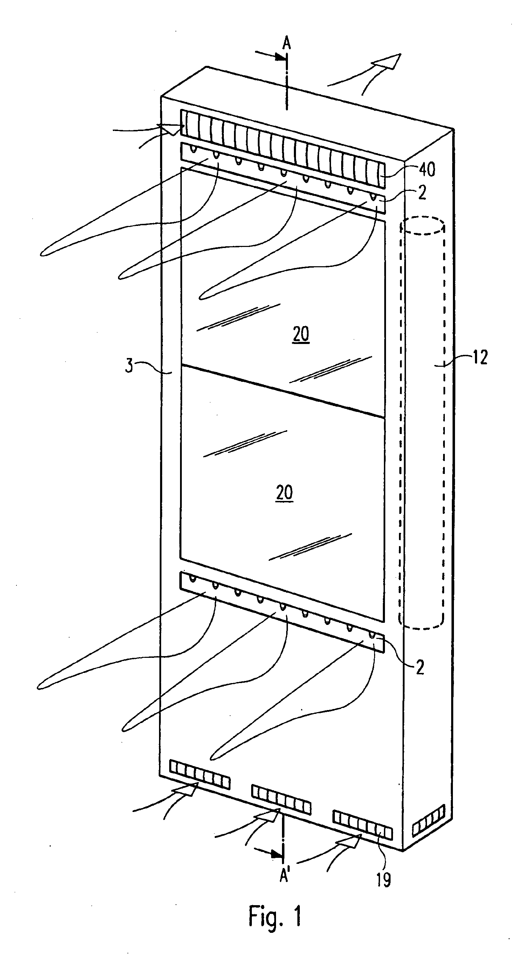

In Fig. 1 ist eine Skizze eines Ausführungsbeispiels einer erfindungsgemäßen Leuchte gezeigt. Beim Ausführungsbeispiel ist die Leuchte eine Außenleuchte, und zwar eine Außenleuchte die sich zum Aufstellen im Freien eignet.

Die Leuchte umfasst gemäß dem Ausführungsbeispiel ein Leuchtengehäuse 3, das insgesamt im Wesentlichen quaderförmig geformt ist, wobei eine Schmalseite als Stellfläche vorgesehen ist. Die Leuchte kann in diesem Sinne aufgestellt werden. Beispielsweise kann die Höhe der Leuchte etwa 3,5 m betragen, die Breite etwa 0,7 bis 0,8 m und die Tiefe etwa 0,2 m.

Die perspektivische Skizze der Fig. 1 zeigt eine Ansicht auf die "Vorderseite" der Leuchte, wobei beim Ausführungsbeispiel die Vorder- und die der Vorderseite gegenüberliegende Rückseite zumindest im Wesentlichen gleich ausgebildet sind. Dies ist herstellungstechnisch vorteilhaft.

Alternativ kann vorgesehen sein, dass das Leuchtengehäuse in Form eines Mastes ausgebildet ist.

Weiterhin umfasst die Leuchte eine Lichtquelle in Form von mehreren Leuchtdioden 2, sowie wenigstens ein Solarpaneel 20, das zur Energieversorgung der Leuchte bzw. der Leuchtdioden 2 vorgesehen ist. Beispielsweise können auf der Vorderseite - wie in Fig. 1 skizziert - zwei Solarpaneele 20 übereinander angeordnet sein. Die Solarpaneele 20 können beispielsweise jeweils etwa 1,2 m mal 0,6 m groß sein. Weiterhin sind (in den Figuren nicht dargestellte) Ein- und Ausschaltmittel vorgesehen, mit denen die Lichtquelle bzw. die Leuchtdioden 2 ein- und ausgeschaltet werden kann bzw. können.

Die Leuchtdioden 2 an der Vorderseite des Leuchtengehäuses 3 sind beim Ausführungsbeispiel wie skizziert in Form von zwei Leuchtdioden-Bändern oberhalb und unterhalb der Solarpaneele 20 am Leuchtengehäuse 3 angeordnet. Das untere Leuchtdioden-Band ist dafür ausgebildet, eine Leuchtdioden-Flut-Beam-Beleuchtung zu erzeugen.

Im Inneren des Leuchtengehäuses 3 ist ein aufladbarer Energiespeicher in Form einer Batterie 12 angeordnet, wie in der Skizze der Fig. 1 gestrichelt angedeutet. Die Batterie 12 ist dazu ausgelegt, die Leuchtdioden 12 mit elektrischer Energie zu versorgen. Es kann vorgesehen sein, dass die Solarpaneele 20 so mit der Batterie 12 verbunden sind, dass eine Aufladung der Batterie 12 durch die Solarpaneele 20 möglich ist. Beim gezeigten Beispiel ist dabei vorgesehen, dass die Leuchte so ausgelegt ist, dass eine Aufladung der Batterie 12 durch die Solarpaneele 20 auch in einem Zustand der Leuchte möglich ist, in dem die Lichtquelle ausgeschaltet ist.

Die Leuchte ist gemäß diesem Ausführungsbeispiel dazu ausgelegt, dass während einer Startphase der Lichtquelle 2, also in einer Phase zwischen einem Einschalten der Lichtquelle und einem stationären Leuchtbetrieb der Lichtquelle, die Versorgung der Lichtquelle 2 mit elektrischer Energie ausschließlich durch den aufladbaren Energiespeicher bzw. die Batterie 12 erfolgt.

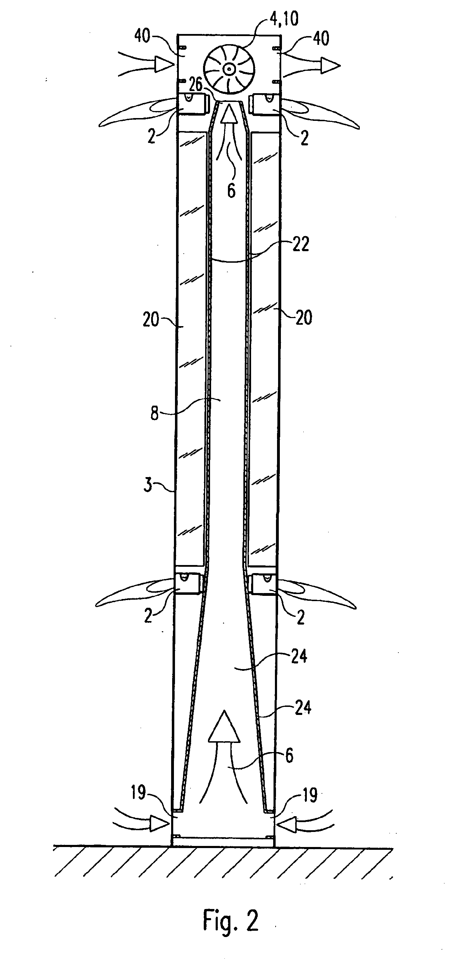

In Fig. 2 ist eine Skizze eines Querschnitts durch die Leuchte längs des Schnitts A-A' gemäß Fig. 1 gezeigt. Die Leuchte weist Energieumwandlungsmittel 4 zur Umwandlung von Energie einer Luftströmung in elektrische Energie in Form eines Generators auf, der beim Ausführungsbeispiel als Turbine 10, beispielweise in Form einer Axialturbine, mit integriertem Dynamo zum Laden der Batterie 12 ausgebildet ist. Der Generator ist dabei dazu ausgelegt, Energie einer Luftströmung 6 in elektrische Energie umzuwandeln, die innerhalb des Leuchtengehäuses 3 aufwärts gerichtet ist. In der Skizze der Fig. 2 ist diese aufwärts gerichtete Luftströmung 6 durch zwei Pfeile symbolisch angedeutet. Insbesondere ist beim gezeigten Beispiel dabei vorgesehen, dass die Leuchte so ausgelegt ist, dass eine Aufladung der Batterie 12 durch die Turbine 10 auch in einem Zustand der Leuchte möglich ist, in dem die Lichtquelle ausgeschaltet ist.

Zur Führung der innerhalb des Leuchtengehäuses 3 aufwärts gerichteten Luftströmung 6 weist die Leuchte einen Kamin 8 mit einer Kaminwand 22 auf. Der Kamin 8 ist dabei derart unterhalb der Turbine 10 angeordnet, dass die oben aus dem Kamin 8 austretende Luftströmung 6 die Turbine 10 antreiben kann.

Der Kamin 8 weist dabei an seinem oberen Ende eine Austrittsöffnung 26 auf, die vorzugsweise düsenartig gestaltet ist.

In seinem unteren Bereich weist das Leuchtengehäuse 3 wenigstens eine Lufteinströmöffnung 19 auf, die derart mit dem Kamin 8 verbunden ist, dass Luft, die durch die Lufteinströmöffnung 19 in das Leuchtengehäuse 3 einströmt in einen unteren Bereich 24 des Kamins 8 gelangt. In den beiden Figuren ist die entsprechende Lufteinströmung mit Pfeilen skizziert. Vorteilhaft können auf mehreren oder allen Außenseiten des Leuchtengehäuses 3 Lufteinströmungsöffnungen 19 vorgesehen sein.

Beim Ausführungsbeispiel ist die Kaminwand 22 in einem unteren Bereich 24 des Kamins 8 nach oben hin konvergent verlaufend ausgebildet, wie aus Fig. 2 ersichtlich. Dies fördert eine Kaminwirkung, wie sie beispielsweise auch bei Kühltürmen von Kraftwerken auftritt.

Beim Ausführungsbeispiel erstreckt sich der untere Bereich 24 mit der konvergent verlaufenden Kaminwand 22 bis etwa auf die Höhe des unteren Leuchtdiodenbands. Nach oben hin schließt sich an den konvergenten Bereich ein etwa zylindrischer Abschnitt des Kamins an, der sich im Wesentlichen bis zur Obergrenze erstreckt, wobei alternativ nach oben hin auch weitere konvergente Abschnitte vorgesehen sein können.

Am unteren Ende dieses konvergenten Abschnitts des Kamins 8 ist die Kaminwand 22 dabei so ausgebildet, dass sie unmittelbar oberhalb der Lufteinströmöffnung 19 von innen an eine Wand des Leuchtengehäuses 3 grenzt. Dies ist strömungstechnisch vorteilhaft.

Die Kaminwand 22 ist thermisch mit dem Solarpaneel 20 und den Leuchtdioden 2 verbunden. Dazu ist die Anordnung der Kaminwand 22 relativ zu dem Solarpaneel 20 derart gestaltet, dass ein flächiger Kontakt zwischen einer Außenseite der Kaminwand 22 und einer Rückseite des Solarpaneels 20 besteht. Ein entsprechender flächiger Kontakt ist zwischen der Kaminwand 22 und der Rückseite der Leuchtdioden 2 vorgesehen.

Der thermische Kontakt zwischen der Kaminwand 22 und dem Solarpaneel 20 bzw. den Leuchtdioden 2 fördert zum einen eine Kühlung des Solarpaneels 20 bzw. der Leuchtdioden 2 und zum anderen dadurch bedingt einen Auftrieb einer in dem Kamin 8 befindlichen Luft.

Die Energieumwandlungsmittel 4 sind beim Ausführungsbeispiel weiterhin dazu ausgebildet, auch eine Energie einer gegebenenfalls im Umfeld bzw. in einer Umgebung des Leuchtengehäuses 3 vorhandenen, im Wesentlichen horizontalen Luftströmung in elektrische Energie umzuwandeln. Hierzu sind in einem Wandbereich des Leuchtengehäuses 3 im Wesentlichen auf Höhe der Turbine 10 Luftleitmittel 40 vorgesehen. Diese können beispielsweise durch einen Lufteinlass auf einer Seite des Leuchtengehäuses 3 und einen mit Bezug auf die Turbine 10 dem Lufteinlass gegenüberliegenden Luftauslass auf der entsprechenden anderen Seite des Leuchtengehäuses 3 vorgesehen sein. Auf diese Weise kann auch Wind mit einer horizontalen Komponente ausgenutzt werden, um elektrische Energie für den Betrieb der Leuchtdioden 2 zu erzeugen.

Der Luftauslass kann vorteilhaft so gestaltet sein, dass er auch einen Austritt der Luft, die aus dem Kamin 8 kommt, aus dem Leuchtengehäuse 3 heraus ermöglicht.

Vorteilhaft sind die Turbine 10 und die Luftleitmittel 40 in einem oberen Bereich des Leuchtengehäuses 3 vorgesehen, da die Windgeschwindigkeit üblicherweise mit zunehmendem Abstand vom Boden zunimmt. Diese Anordnung ist auch vorteilhaft, weil die Wirkung des Kamins 8 mit zunehmender Höhe des Kamins 8 größer wird.

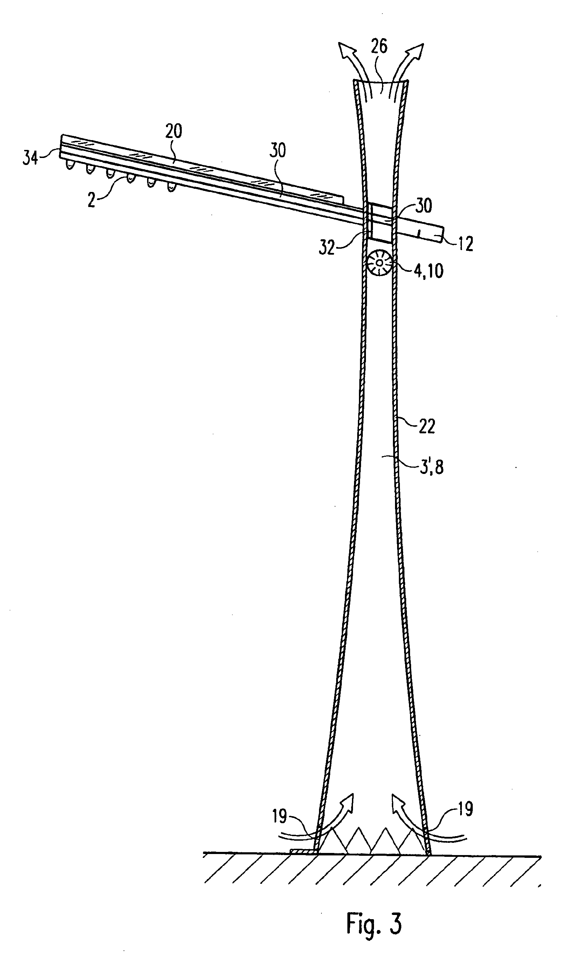

In Fig. 3 ist ein zweites Ausführungsbeispiel einer erfindungsgemäßen Leuchte skizziert. Im Folgenden wird lediglich auf Unterschiede zum ersten Ausführungsbeispiel eingegangen. Soweit nicht anders dargestellt, gelten die obigen Ausführungen zum ersten Ausführungsbeispiel sinngemäß auch für das zweite Ausführungsbeispiel.

Beim zweiten Ausführungsbeispiel ist das Leuchtengehäuse 3' in Form eines Mastes vorgesehen, so dass im Allgemeinen eine besonders ausgeprägte Kaminwirkung erzielt werden kann. Der im Inneren des Leuchtengehäuses 3' angeordnete Kamin 8 kann hierdurch besonders lang und somit besonders wirkungsvoll gestaltet werden. Die Turbine 10 ist bei diesem Beispiel in einem oberen Bereich des Kamins 8 angeordnet. Die Mastwand kann zumindest teilweise - insbesondere in einem Bereich unterhalb der Turbine 10 - direkt als Kaminwand 22 dienen.

Die Lichtquelle, beispielsweise wiederum in Form von Leuchtdioden 2, kann in diesem Fall beispielsweise in einem oberen Bereich des Mastes vorgesehen sein. Beim Ausführungsbeispiel ist die Lichtquelle auf einer Unterseite eines seitlich vom Mast abstehenden Trägers 34 vorgesehen, der flächig ausgestaltet sein kann. Auf der Oberseite des Trägers 34 ist das wenigstens eine Solarpaneel (20) angeordnet. Beispielsweise eignet sich eine derartige Ausgestaltung als Leuchte zur Straßenbeleuchtung. Beim gezeigten Beispiel ist der Träger 34 oberhalb der Turbine 10 mit dem Mast verbunden.

Weiterhin ist bei diesem Ausführungsbeispiel wenigstens eine längliche Heatpipe 30 vorgesehen, die dazu dient, einen Transport von Wärme, die im Bereich der Lichtquelle und/oder im Bereich des Solarpaneels 20 entsteht, effektiv zum Kamin 8 zu transportieren. Dabei kann am Mast oberhalb des Generators bzw. der Turbine 10 ein Wärmetauscher 32 vorgesehen sein, der mit einem Endbereich der Heatpipe 30 thermisch verbunden ist. Der andere Endbereich der Heatpipe 30 kann dann im Bereich der Lichtquelle bzw. des Solarpaneels 20 angeordnet sein. Die wenigstens eine Heatpipe 30 erstreckt sich somit bei diesem Beispiel in ihrer Längsrichtung seitlich vom Mast ab und kann dabei vorzugsweise an dem Träger 34 angeordnet sein. Es kann auch vorgesehen sein, dass die wenigstens eine Heatpipe 30 einen Teil des Trägers 34 bildet.

Die Batterie 12 ist bei diesem Beispiel statisch vorteilhaft mit Bezug auf den Mast dem Solarpaneel 20 und der Lichtquelle gegenüberliegend angeordnet. Der Träger 34 kann hierbei so gestaltet sein, dass er auf zwei Seiten vom Mast absteht, so dass er einerseits als Halterung für das Solarpaneel 20 und die Lichtquelle dient und andererseits auch zur Halterung der Batterie 12.

Bei allen Ausführungsbeispielen kann weiterhin vorgesehen sein, dass das Leuchtengehäuse 3 bzw. der Mast 3' in einem Bereich lichtdurchlässig gestaltet ist. Hierdurch wird ermöglicht, die Leuchte so aufzustellen, dass der lichtdurchlässige Bereich zeitweise von der Sonne bestrahlt werden kann, so dass auf diese Weise die Wärmeentwicklung innerhalb des Kamins 8 und damit die aufwärts gerichtete Luftströmung im Kamin 8 unterstützt wird.

Vorzugsweise ist dabei der lichtdurchlässige Bereich des Leuchtengehäuses 3 bzw. 3' so groß dimensioniert, dass der beschriebene, erzielbare Effekt merklich ist. Beispielsweise kann vorgesehen sein, dass der lichtdurchlässige Bereich mindestens 10% der Oberfläche des Leuchtengehäuses, vorzugsweise mindestens 20% der Oberfläche des Leuchtengehäuses einnimmt. Aufgrund der möglichen Sonneneinstrahlung bei fix aufgestelltem Leuchtengehäuse ist weiterhin vorteilhaft, wenn sich der lichtdurchlässige Bereich - im Horizontalschnitt betrachtet - lediglich auf einer Hälfte des Leuchtengehäuses erstreckt.

Wenn - wie anhand des ersten Ausführungsbeispiels exemplarisch gezeigt - das Leuchtengehäuse 3 und die Kaminwand 22 durch zwei separate Bauteile gebildet sind, ist vorzugsweise auch die Kaminwand 22 in einem entsprechenden Bereich, der dem lichtdurchlässigen Bereich des Leuchtengehäuses 3 benachbart ist, ebenfalls lichtdurchlässig gestaltet, so dass von außen einfallendes Licht bis in das Innere des Kamins 8 gelangen kann. Wenn - wie anhand des zweiten Ausführungsbeispiels exemplarisch gezeigt - das Leuchtengehäuse 3' und die Kaminwand 22 durch ein identisches Bauteil gebildet sind, also beispielsweise durch eine entsprechende Mastwand, so kann diese den lichtdurchlässigen Bereich aufweisen.

Zur weitergehenden Unterstützung dieses Effekts kann dabei vorgesehen sein, dass ein Innenwandbereich des Kamins 8, der dem lichtdurchlässigen Bereich mit Bezug auf die vertikale Hauptachse des Leuchtengehäuses 3 bzw. des Mastes 3' gegenüberliegt, schwarz gefärbt ist, so dass die Absorption der in den Kamin 8 gelangenden Strahlung, insbesondere Lichtstrahlung, verstärkt wird.

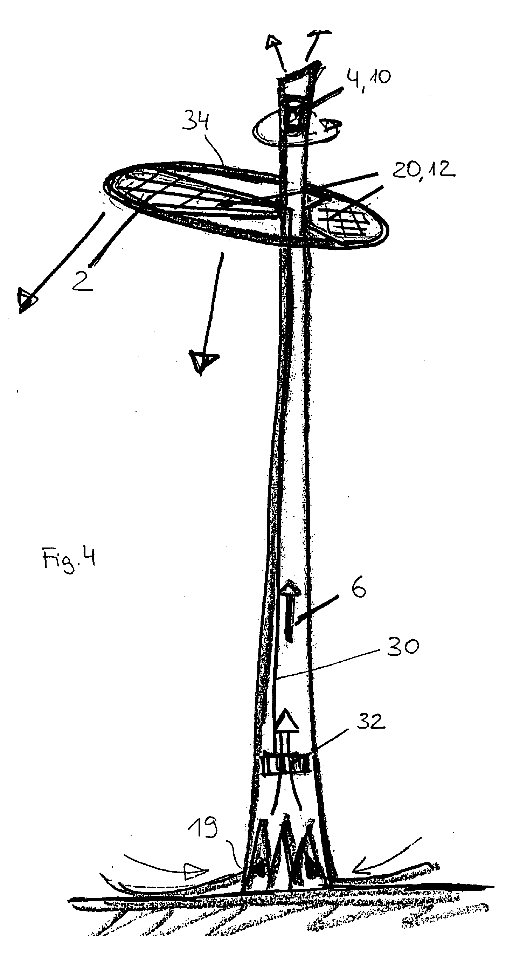

In Fig. 4 ist eine Skizze zu einer weiteren erfindungsgemäßen Variante gezeigt, wobei die Bezugszeichen ihre oben beschriebene Bedeutung haben. Man erkennt insbesondere, dass sich die Heatpipe 30 am Leuchtengehäuse 3 bzw. am Mast 3' in vertikaler Richtung erstrecken kann und dabei in einem unteren Bereich, insbesondere unterhalb der Turbine 10, beispielsweise im unteren Drittel des Leuchtengehäuses, durch den Wärmetauscher 32 thermisch mit dem Kamin verbunden ist.

### Bezugszeichenliste

- 2: Lichtquelle, beispielsweise Leuchtdioden
- 3, 3': Leuchtengehäuse
- 4: Energieumwandlungsmittel zur Umwandlung von Energie einer Luftströmung in elektrische Energie
- 6: innerhalb des Leuchtengehäuses aufwärts gerichtete Luftströmung
- 8: Kamin
- 10: Turbine
- 12: Batterie
- 19: Lufteinströmöffnung
- 20: Solarpaneel
- 22: Kaminwand
- 24: unterer Bereich der Kaminwand
- 26: Austrittsöffnung am oberen Ende des Kamins
- 30: Heatpipe
- 32: Wärmetauscher
- 34: Träger
- 40: Luftleitmittel

## Patentansprüche

1. Leuchte, aufweisend
- eine Lichtquelle (2),
- ein Leuchtengehäuse (3), und
- Energieumwandlungsmittel (4) zur Umwandlung von Energie einer Luftströmung in elektrische Energie,
wobei die Energieumwandlungsmittel (4) dazu ausgelegt sind, Energie einer Luftströmung (6) umzuwandeln, die innerhalb des Leuchtengehäuses (3) aufwärts gerichtet ist,
weiterhin aufweisend
- einen Kamin (8) mit einer Kaminwand (22) zur Führung der innerhalb des Leuchtengehäuses (3) aufwärts gerichteten Luftströmung (6), wobei der Kamin (8) in dem Leuchtengehäuse (3) angeordnet ist,
wobei das Leuchtengehäuse (3) einen lichtdurchlässigen Bereich aufweist, wobei die Innenwandung des Kamins (8) in einem Bereich, der mit Bezug auf die vertikale Hauptachse des Leuchtengehäuses (3) dem lichtdurchlässigen Bereich gegenüberliegt, schwarz ist,
**dadurch gekennzeichnet,**
**dass** sich der lichtdurchlässige Bereich - im Horizontalschnitt betrachtet - lediglich auf einer Hälfte des Leuchtengehäuses (3) erstreckt.

2. Leuchte nach Anspruch 1,
bei der die Lichtquelle (2) mit elektrischer Energie betrieben werden kann, weiterhin aufweisend
- Mittel zum Betrieb der Lichtquelle (2) mit aus den Energieumwandlungsmitteln (4) gewonnener elektrischer Energie.

3. Leuchte nach Anspruch 1 oder 2,
weiterhin aufweisend
- einen aufladbaren Energiespeicher, vorzugsweise in Form einer Batterie (12), der dazu ausgelegt ist, die Lichtquelle (2) mit elektrischer Energie zu versorgen, und der so mit den Energieumwandlungsmitteln (4) verbunden ist, dass er mit elektrischer Energie, die mit den Energieumwandlungsmitteln (4) gewonnen ist, aufgeladen werden kann.

4. Leuchte nach Anspruch 3,
wobei die Leuchte dazu ausgelegt ist, dass während einer Startphase der Lichtquelle (2) die Versorgung der Lichtquelle (2) mit elektrischer Energie ausschließlich durch den aufladbaren Energiespeicher erfolgt.

5. Leuchte nach einem der vorhergehenden Ansprüche,
bei der die Energieumwandlungsmittel (4) eine Turbine (10) umfassen, die oberhalb des Kamins (8) oder in einem oberen Bereich des Kamins (8) angeordnet ist, und die dazu ausgelegt ist, durch die oben aus dem Kamin (8) austretende Luftströmung (6) angetrieben zu werden.

6. Leuchte nach einem der Ansprüche 1 bis 4,
bei der die Energieumwandlungsmittel (4) eine Turbine (10) umfassen, die im unteren Bereich des Kamins (8) angeordnet ist, und die dazu ausgelegt ist, durch die oben aus dem Kamin (8) austretende Luftströmung (6) angetrieben zu werden.

7. Leuchte nach einem der vorhergehenden Ansprüche,
weiterhin aufweisend
- wenigstens ein Solarpaneel (20), das thermisch mit der Kaminwand (22) verbunden ist.

8. Leuchte nach einem der vorhergehenden Ansprüche,
bei der die Lichtquelle (2) thermisch mit der Kaminwand (22) verbunden ist.

9. Leuchte nach einem der vorhergehenden Ansprüche,
weiterhin aufweisend wenigstens eine Heatpipe (30), die thermisch mit der
Kaminwand (22) verbunden ist.

10. Leuchte nach einem der vorhergehenden Ansprüche,
bei der die Energieumwandlungsmittel (4) weiterhin dazu ausgelegt sind, außerdem Energie einer gegebenenfalls im Umfeld des Leuchtengehäuses (3) vorhandenen, im Wesentlichen horizontalen Luftströmung in elektrische Energie umzuwandeln.

11. Leuchte nach Anspruch 10,
bei der die Energieumwandlungsmittel (4) Luftleitmittel (40) umfassen, die dazu ausgelegt sind, die im Wesentlichen horizontale Luftströmung in das Innere der Leuchte zu leiten.

## Claims

1. A luminaire, having
- a light source (2),
- a luminaire housing (3), and
- energy-conversion means (4) for converting energy of an air flow into electrical energy,
wherein the energy-conversion means (4) are designed to convert energy of an air flow (6) that is directed upwards within the luminaire housing (3), having, furthermore,
- a chimney (8) with a chimney wall (22) for guiding the air flow (6) that is directed upwards within the luminaire housing (3), wherein the chimney (8) is arranged in the luminaire housing (3),
wherein the luminaire housing (3) has a light-permeable region, wherein the inner wall of the chimney (8) is black in a region which, in relation to the vertical main axis of the luminaire housing (3), lies opposite the light-permeable region,
**characterised in that**
the light-permeable region - viewed in horizontal section - extends only along one half of the luminaire housing (3).

2. A luminaire according to claim 1,
in which the light source (2) can be operated with electrical energy,
having, furthermore,
- means to operate the light source (2) with electrical energy obtained from the energy-conversion means (4).

3. A luminaire according to claim 1 or 2,
having, furthermore,
- a rechargeable energy store, preferably in the form of a battery (12), which is designed to supply the light source (2) with electrical energy and which is connected to the energy-conversion means (4) in such a way that it can be recharged with electrical energy obtained with the energy-conversion means (4).

4. A luminaire according to claim 3,
wherein the luminaire is designed so that during a starting phase of the light source (2) the supply of the light source (2) with electrical energy is effected exclusively by means of the rechargeable energy store.

5. A luminaire according to one of the preceding claims,
in which the energy-conversion means (4) comprise a turbine (10) which is arranged above the chimney (8) or in an upper region of the chimney (8) and which is designed to be driven by the air flow (6) issuing from the chimney (8) at the top.

6. A luminaire according to one of claims 1 to 4,
in which the energy-conversion means (4) comprise a turbine (10) which is arranged in the lower region of the chimney (8) and which is designed to be driven by the air flow (6) issuing from the chimney (8) at the top.

7. A luminaire according to one of the preceding claims, having, furthermore,
- at least one solar panel (20) which is thermally connected to the chimney wall (22).

8. A luminaire according to one of the preceding claims, in which the light source (2) is thermally connected to the chimney wall (22).

9. A luminaire according to one of the preceding claims, having, furthermore, at least one heat pipe (30) which is thermally connected to the chimney wall (22).

10. A luminaire according to one of the preceding claims, in which the energy-conversion means (4) are designed, furthermore, to convert into electrical energy additionally energy of a substantially horizontal air flow that may possibly be present in the surroundings of the luminaire housing (3).

11. A luminaire according to claim 10,
in which the energy-conversion means (4) comprise air-conducting means (40) which are designed to conduct the substantially horizontal air flow into the interior of the luminaire.

## Revendications

1. Lampe présentant
- une source de lumière (2),
- un boîtier de lampe (3), et
- des moyens de conversion d'énergie (4) pour convertir l'énergie d'un courant d'air en énergie électrique,
les moyens de conversion d'énergie (4) étant conçus afin de convertir de l'énergie d'un courant d'air (6) qui est ascendant dans le boîtier de lampe (3),
présentant en outre
- une cheminée (8) avec une paroi de cheminée (22) pour le guidage du courant d'air (6) ascendant dans le boîtier de lampe (3), la cheminée (8) étant disposée dans le boîtier de lampe (3),
le boîtier de lampe (3) présentant une zone perméable à la lumière, la paroi intérieure de la cheminée (8) étant noire dans une zone qui fait face à la zone perméable à la lumière par rapport à l'axe principal vertical du boîtier de lampe (3),
**caractérisée en ce que** la zone perméable à la lumière, considérée en coupe horizontale, s'étend juste sur une moitié du boîtier de lampe (3).

2. Lampe selon la revendication 1, pour laquelle la source de lumière (2) peut fonctionner à l'énergie électrique, présentant en outre
- des moyens pour faire fonctionner la source de lumière (2) avec de l'énergie électrique obtenue à partir des moyens de conversion d'énergie (4).

3. Lampe selon la revendication 1 ou 2, présentant en outre
- un accumulateur d'énergie rechargeable, de préférence sous la forme d'une batterie (12), qui est conçu afin d'alimenter la source de lumière (2) en énergie électrique, et qui est relié aux moyens de conversion d'énergie (4) de sorte à pouvoir être rechargé en énergie électrique qui est obtenue avec les moyens de conversion d'énergie (4).

4. Lampe selon la revendication 3, la lampe étant conçue afin que pendant une phase de démarrage de la source de lumière (2), l'alimentation de la source de lumière (2) en énergie électrique soit exclusivement assurée par l'accumulateur d'énergie rechargeable.

5. Lampe selon l'une quelconque des revendications précédentes, pour laquelle les moyens de conversion d'énergie (4) comportent une turbine (10) qui est disposée au-dessus de la cheminée (8) ou dans une zone supérieure de la cheminée (8) et qui est conçue afin d'être entraînée par le courant d'air (6) sortant en haut de la cheminée (8).

6. Lampe selon l'une quelconque des revendications 1 à 4, pour laquelle les moyens de conversion d'énergie (4) comportent une turbine qui est disposée dans la zone inférieure de la cheminée (8) et qui est conçue afin d'être entraînée par le courant d'air (6) sortant en haut de la cheminée (8).

7. Lampe selon l'une quelconque des revendications précédentes, présentant en outre
- au moins un panneau solaire (20) qui est relié thermiquement à la paroi de cheminée (22).

8. Lampe selon l'une quelconque des revendications précédentes, pour laquelle la source de lumière (2) est reliée thermiquement à la paroi de cheminée (22).

9. Lampe selon l'une quelconque des revendications précédentes, présentant en outre au moins un tube caloporteur (30) qui est relié thermiquement à la paroi de cheminée (22).

10. Lampe selon l'une quelconque des revendications précédentes, pour laquelle les moyens de conversion d'énergie (4) sont en outre conçus afin de convertir de plus en énergie électrique de l'énergie d'un courant d'air sensiblement horizontal, présent éventuellement dans l'environnement du boîtier de lumière (3).

11. Lampe selon la revendication 10, pour laquelle les moyens de conversion d'énergie (4) comportent des moyens déflecteurs d'air (40) qui sont conçus afin de guider le courant d'air sensiblement horizontal à l'intérieur de la lampe.
